# EUROPÄISCHE PATENTSCHRIFT

(11) **EP 2 952 361 B1**
(45) Veröffentlichungstag und Bekanntmachung des Hinweises auf die Patenterteilung: **08.06.2016**
(21) Anmeldenummer: 15168323.2
(22) Anmeldetag: 20.05.2015
(51) Int. Cl.: B60B 35/00, B60G 7/00, B60G 3/20, B29C 65/00

(54) **GEBAUTER RADTRÄGER**
CONSTRUCTED WHEEL SUPPORT
SUPPORT DE ROUE BÂTI

(30) Priorität: 05.06.2014 DE 102014107953
(43) Veröffentlichungstag der Anmeldung: 09.12.2015
(73) Patentinhaber: Benteler Automobiltechnik GmbH, 33102 Paderborn (DE)
(72) Erfinder: Peitz, Dipl.-Ing. Detlev, 33106 Paderborn (DE)
(74) Vertreter: Griepenstroh, Jörg

(56) Entgegenhaltungen:
- EP-A1- 0 025 744
- EP-A1- 1 612 068
- CN-U- 202 378 655
- DE-U1- 29 519 965
- JP-A- S6 067 203
- JP-A- 2012 086 642
- JP-A- 2014 004 953
- KR-A- 20100 045 789
- US-A- 3 292 944

## Beschreibung

Die vorliegende Erfindung betrifft einen gebauten Radträger für eine Mehrlenkerachse zur Anordnung an einem Kraftfahrzeug gemäß den Merkmalen im Oberbegriff von Patentanspruch 1.

Kraftfahrzeuge weisen Radaufhängungen auf, um eine kinematische Koppelung mit dem Kraftfahrzeugrad herzustellen, so dass das Kraftfahrzeugrad gegenüber der Kraftfahrzeugkarosserie relativ beweglich ist und ein- bzw. ausfedern kann.

Ziel ist es dabei die ungefederten Radmassen mithin die radseitigen Komponenten so leicht wie möglich zu gestalten, um eine hohe Agilität und Dynamik im Fahrverhalten des Kraftfahrzeuges zu erzielen.

Gleichzeitig müssen vorgegebene geometrische Abmessungen eingehalten werden, um die geforderten geometrischen Freiheitsgrade im Bereich des Bauraums zu erhalten, so dass beim Ein- bzw. Ausfedervorgang keine Achsbauteile kollidieren.

Aus dem Stand der Technik sind dazu insbesondere Einzelradaufhängungen in Mehrlenkerbauweise bekannt. Hierbei wird ein Radträger bereitgestellt, der über mehrere Lenker relativ beweglich zur Kraftfahrzeugkarosserie gekoppelt ist.

An dem Radträger selbst ist eine Radnabe gekoppelt, und wiederum dazu dann drehbeweglich das Rad. Optional kann der Radträger von einer Antriebswelle durchgriffen sein, um eine entsprechende Antriebsleistung zum Forttrieb des Kraftfahrzeuges zu übertragen.

Eine solche Mehrlenkerachse ist jedoch konstruktiv und herstellungstechnisch teuer in Relation zu einer einfacheren Achskonstruktion, beispielsweise einer Verbundlenkerachse. Ein solcher Radträger an einer Mehrlenkerachse ist beispielsweise aus der DE 295 19 965 U1 bekannt.

Um nunmehr eine Mehrlenkerachse auch für alle Kraftfahrzeugklassen, insbesondere auch die Mittelwagenklasse oder aber Kleinwagenklasse bereitzustellen, müssen die Herstellungskosten gesenkt werden, bei mindestens gleichbleibender Festigkeit und/oder geringerem Bauteilgewicht.

Aufgabe der vorliegenden Erfindung ist es daher, ausgehend vom Stand der Technik einen Radträger für eine Mehrlenkerachse zur Anordnung an einem Kraftfahrzeug bereitzustellen, der gegenüber aus dem Stand der Technik bekannten Radträgern eine mindestens gleichbleibende Festigkeit aufweist, bei geringeren Herstellungskosten sowie einem geringeren Bauteilgewicht.

Die zuvor genannte Aufgabe wird erfindungsgemäß mit einem Radträger gemäß den Merkmalen im Patentanspruch 1 gelöst. Vorteilhafte Ausführungsvarianten der vorliegenden Erfindung sind Gegenstand der abhängigen Patentansprüche.

Der Radträger zur Anordnung an einer Kraftfahrzeugachse an einer Mehrlenkerachse, weist einen Flansch zur Aufnahme einer Radnabe sowie mindestens zwei Aufnahmen zur drehbaren Koppelung mit Lenkern auf, wobei der Radträger an einen Längslenker mittels thermischen Fügen gekoppelt ist, zeichnet sich erfindungsgemäß dadurch aus, dass der Radträger als Schweißbauteil ausgebildet ist und einen Grundkörperbereich aufweist, welcher mindestens zwei Blechbauteile aufweist, die durch thermisches Fügen miteinander gekoppelt sind, wobei der Grundkörperbereich eine fachwerkartige Struktur aufweist.

Erfindungsgemäß wird somit der Radträger selbst nicht als Blechumformbauteil bzw. Schalenbauteil und insbesondere Tiefziehbauteil hergestellt, sondern als aus mehreren einzelnen Blechteilen bestehendes Schweißbauteil. Erfindungsgemäß können somit die Herstellungskosten zunächst dadurch gesenkt werden, da kein aufwendiges Umformwerkzeug zur Herstellung eines einschaligen Tiefziehbauteils bereitgestellt werden muss. Gleichzeitig können die Formgebungsfreiheitsgrade erhöht werden, da diese nicht von lokalen Umformgraden eines einschaligen Blechformbauteils abhängen. Darüber hinaus ergibt sich die Möglichkeit, dass die mehreren mittels Schweißen verbundenen einzelnen Blechbauteile jeweils individuell in Festigkeit und/oder Wandstärke sowie gegebenenfalls Werkstoffgüte in Abhängigkeit der erwarteten Belastungen ausgelegt werden können. Gerade hier liegt ein Wesentlicher Vorteil, da dadurch das Bauteilgewicht sowie die Herstellungskosten gleichzeitig gesenkt werden können, insbesondere gegenüber aus dem Stand der Technik bekannten Radträgern, die entweder als Blechumformbauteile, Fräsbauteile oder aber auch als Gußbauteile und/oder schmiedetechnisch hergestellte Bauteile ausgebildet sind. Bevorzugt weist der Radträger drei Aufnahmen zur Koppelung mit Lenkern auf. Gerade hier liegt ein weiterer wesentlicher Vorteil, dadurch, dass die drei Aufnahmen räumlich voneinander getrennt beliebig, insbesondere auf die Kraftfahrzeugvertikal- und Kraftfahrzeuglängsrichtung, jedoch auch in Kraftfahrzeugquerrichtung an dem Radträger angeordnet werden können, wobei der Radträger entsprechend nicht als komplex geformtes Umformbauteil hergestellt werden muss, sondern aufgrund der Herstellung als Schweißbauteil hier hohe Formgebungsfreiheitsgrade bei kostengünstiger Herstellungsmöglichkeit besitzt.

Der erfindungsgemäße Radträger weist somit einen Flansch auf, wobei an dem Flansch eine Radnabe gekoppelt ist. Die Radnabe wird insbesondere formschlüssig mithin über eine Schraubverbindung mit dem Flansch gekoppelt. Der Flansch selber wird mit den anderen Blechbauteilen stoffschlüssig gekoppelt. Der so hergestellte Radträger wird wiederum ebenfalls mittels Stoffschluss an einem Längslenker eines Kraftfahrzeuges gekoppelt. Der Längslenker selbst ist insbesondere auch als einstückiges werkstoffeinheitliches insbesondere als Schalenbauteil hergestellt.

Das thermische Fügen wird insbesondere im Falle von Stahlwerkstoffen als Schweißverfahren ausgebildet. Dabei können Punktschweißungen vorgenommen werden oder alternativ auch zur Koppelung längere und/oder durchgehende Schweißnähte gezogen werden.

Insbesondere wird der erfindungsgemäße Radträger zur Herstellung einer Mehrlenkerachse verwendet. Dies bedeutet, dass mindestens zwei, bevorzugt drei Aufnahmen an dem Radträger ausgebildet sind, um Gelenklager und/oder Schraubbolzen am Ende von Lenkern insbesondere Lenkerarmen aufzunehmen und mit diesen drehbar gekoppelt zu sein, um die kinematische Koppelung an dem Kraftfahrzeugrad zu gewährleisten.

Erfindungsgemäß weist der Radträger in seinem Inneren eine fachwerkartige Struktur auf bzw. ist der Grundkörperbereich als fachwerkartige Struktur ausgebildet. Die fachwerkartige Struktur bietet hierbei den Vorteil, dass diese bedarfsgerecht an auftretende Belastungen angepasst werden kann und grundsätzlich an die zu erwartenden auf das Kraftfahrzeugrad sowie den Radträger wirkenden Kräfte ausgelegt und dimensioniert werden kann. Gleichzeitig wird aufgrund der fachwerkartigen Struktur das Bauteilgewicht des Radträgers reduziert, bei mindestens gleichbleibender oder aber gesteigerter Festigkeit.

Erfindungsbestandteil ist somit auch eine Radträgeranordnung bzw. ein Längslenker mit angeschweißtem Radträger, wobei der Radträger der Radträgeranordnung oder des Längsträgers dann erfindungsgemäß mit der fachwerkartigen Struktur im Grundkörperbereich ausgebildet ist.

Hierzu sind zwei Spangenbauteile ausgebildet, die jeweils als Blechumformbauteil, jedoch nicht als Schalenbauteil hergestellt sind. Insbesondere zeichnet sich dies dadurch aus, dass jeweils um eine parallel versetzte Biegeachse gebogen wird, nicht jedoch um mehrere Biegeachsen, welche in einem Winkel zueinander stehen. Somit kann ein jeweiliges Spangenbauteil beispielsweise auch durch Kanten bzw. Abkanten hergestellt werden und ist nicht zwangsläufig als dreidimensional umgeformtes Pressbauteil oder aber Tiefziehbauteil herzustellen.

Ferner ist der Radträger dadurch gekennzeichnet, dass ein weiteres Stützbauteil vorgesehen ist, welches ebenfalls den Radträger im Bereich des Längslenkers ausbildet und somit den Radträger mit dem Längslenker koppelt. Das Stützbauteil dient somit zur Versteifung des Längsträgers, zum Abstützen des Flansches und/oder des Radträgers, insbesondere an einem Spangenbauteil sowie zur Ausbildung einer dritten Aufnahme zur Koppelung mit einem weiteren Lenker zur Ausbildung der Mehrlenkerachse. Das Stützbauteil ist dabei bevorzugt im Querschnitt U-förmig ausgebildet und weist einen Grundsteg mit sich von dem Grundsteg erstreckenden Schenkeln auf. Die Aufnahme zur Koppelung mit dem weiteren Lenker ist dann weiterhin bevorzugt durch zwei Öffnungen in den Schenkeln ausgebildet. Alternativ ist es im Rahmen der Erfindung vorstellbar das Stützbauteil mit zwei zueinander parallel versetzten Spangenbauteilen auszubilden. Das Stützbauteil in beiden zuvor genannten Ausgestaltungsvarianten in Verbindung mit den zuvor erwähnten Spangenbauteilen bildet dann die fachwerkartige Struktur innerhalb des Grundkörpers aus.

Gerade hier liegt ein weiterer Vorteil des erfindungsgemäßen Radträgers. Alle zuvor benannten einzelnen Bauteile mithin die Spangenbauteile aber auch das Stützbauteil können unabhängig voneinander produziert werden. So ist es möglich, jeweils einen voneinander verschiedenen Werkstoff, insbesondere einen Werkstoff auf Stahllegierungsbasis zu wählen. Optional ergänzend oder alternativ ist es möglich eine voneinander verschiedene Wandstärke der einzelnen Bauteile zu wählen. Auch ist es wiederum möglich, dass das jeweilige Bauteil in sich voneinander verschiedene Wandstärken aufweist. Ferner ist es im Rahmen der Erfindung möglich jedes einzelne Bauteil individuell partiell zu vergüten. Besonders bevorzugt wird dazu mindestens ein Bauteil warmumgeformt und pressgehärtet. Die bei dem nachträglichen thermischen Fügen Beeinflussung in der Wärmeeinflusszone selbst ist dabei im Rahmen der Erfindung bezüglich einer damit verringerten Festigkeit in diesem Bereich zu vernachlässigen, da sie durch den konstruktiven Aufbau insbesondere durch die Fachwerkstruktur kompensiert wird.

In dem Zusammenspiel mit den oben benannten Vorteilen ergibt sich wiederum die Möglichkeit die einzelnen Bauteile im Bereich der Aufnahme selbst derart auszubilden, dass beispielsweise die Aufnahmen zur Anbindung der Lenker bzw. Lager für die Lenker und insbesondere von Schraubbolzen für die Lenker verstärkt ausgebildet sein können. Diese Verstärkung kann beispielsweise durch eine Vergrößerung der Wanddicke ausgebildet sein, aber auch in einer zumindest lokalen partiellen Vergütung des Bauteils selber.

Bevorzugt bilden dazu die zwei Spangenbauteile jeweils an ihren Enden, wobei sich das Ende eines Spangenbauteils mit dem Ende des zweiten Spangenbauteils auf die Kraftfahrzeuglängsrichtung bezogen gegenüberliegen, dann zusammen eine Aufnahme zur Anbindung eines Kraftfahrzeuglenkers aus. Gleiches gilt für das andere Ende der Spangenbauteile, wobei auch hier wiederum eine Aufnahme für die Kraftfahrzeuglenker durch die zwei gegenüberliegenden Enden eines jeden Spangenbauteils ausgebildet ist.

Weiterhin besonders bevorzugt wird maßgeblich der Grundkörperbereich von den zwei Spangenbauteilen ausgebildet und/oder von diesen eingeschlossen. Der Grundkörperbereich selbst ist bevorzugt hohl ausgebildet. Dies bietet wiederum die Möglichkeit, dass hier eine Antriebswelle durchgeführt wird, so dass der erfindungsgemäße Radträger sowohl bei nicht angetriebenen aber auch angetriebenen Kraftfahrzeugachsen zum Einsatz kommen kann. Ferner ist im Bereich des hohlen Grundkörpers dann auch eine einfache Montage, der Radnabe selbst möglich, was wiederum die Produktionskosten einer mit dem erfindungsgemäßen Radträger hergestellten Kraftfahrzeugachse senkt.

Weitere Vorteile, Merkmale, Eigenschaften und Aspekte der vorliegenden Erfindung ergeben sich aus der nachfolgenden Beschreibung. Bevorzugte Ausführungsformen sind in den schematischen Figuren dargestellt. Diese dienen dem einfachen Verständnis der Erfindung. Die zuvor und auch nachfolgend genannten Merkmale sind dabei im Rahmen der Erfindung beliebig kombinierbar mit den sich damit ergebenden Vorteilen.

Es zeigen:
- Figur 1 und 2: einen aus dem Stand der Technik bekannten Längslenker mit Radträger als einschaliges Umformbauteil;
- Figur 3: einen Längsträger mit erfindungsgemäßem Radträger in perspektivischer Ansicht und
- Figur 4: das Innenleben eines erfindungsgemäßen Radträgers in Rückansicht

In den Figuren werden für gleiche oder ähnliche Bauteile dieselben Bezugszeichen verwendet, auch wenn eine wiederholte Beschreibung aus Vereinfachungsgründen entfällt.

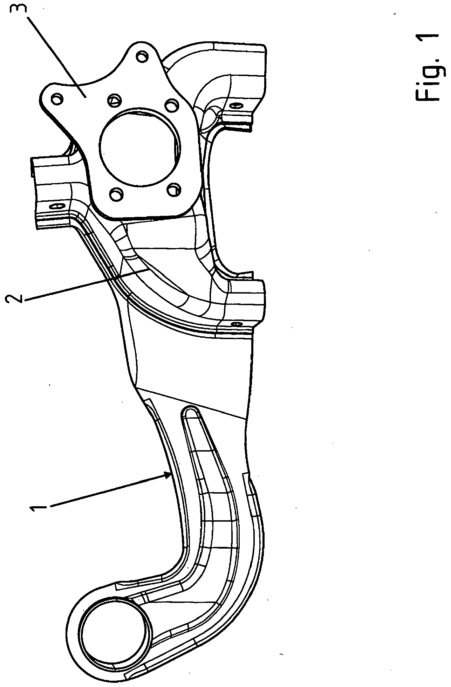

Figur 1 zeigt einen Längslenker 1 mit an dem Längslenker 1 angeschweißtem Radträger 2, wobei der Radträger 2 als einschaliges Blechumformbauteil ausgebildet ist. Mit dem Radträger 2 selbst ist wiederum ein Flansch 3 in Form einer Flanschplatte zur Koppelung mit einer nicht näher dargestellten Radnabe gezeigt.

Der Radträger 2 selbst ist an den Längslenker 1 mittels nicht näher dargestellter Schweißverbindung stoffschlüssig gekoppelt.

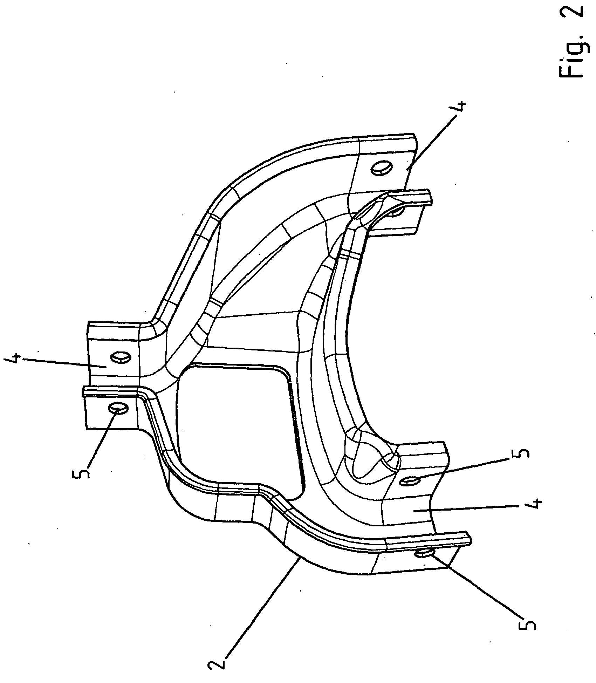

Figur 2 zeigt eine Rückseite des aus dem Stand der Technik bekannten Radträgers 2, wobei gut ersichtlich drei Aufnahmen 4 ausgebildet sind, wobei jeweils an einer Aufnahme 4 links- und rechtsseitig eine Montageöffnung 5 ausgebildet ist, zur Aufnahme eines nicht näher ausgebildeten Schraubbolzen, so dass eine ebenfalls nicht näher dargestellter Lenker drehbar an den Radträger 2 gekoppelt werden kann.

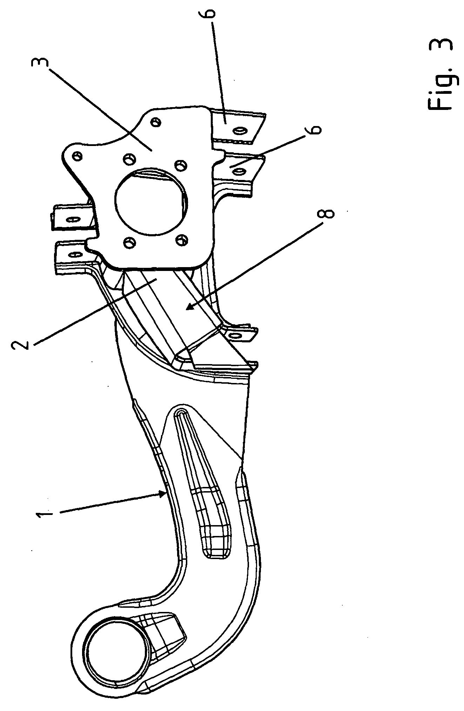

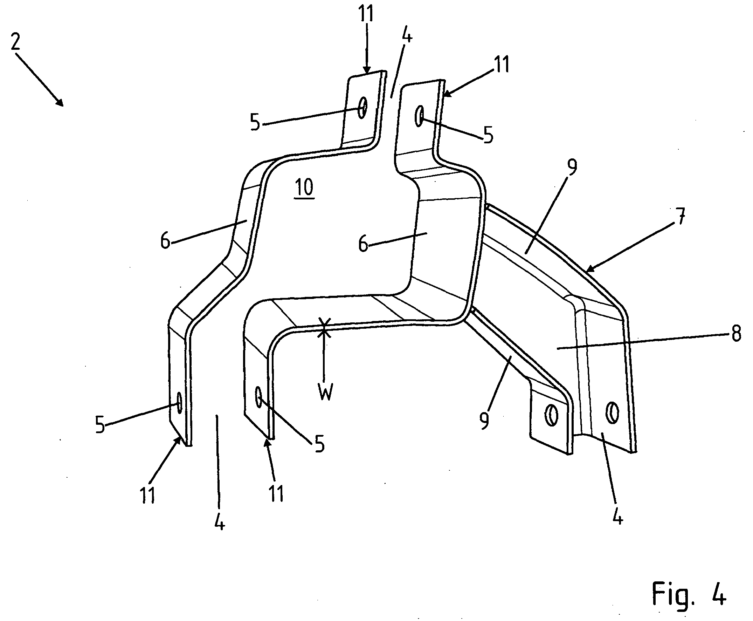

Figur 3 zeigt eine Ausgestaltungsvariante eines erfindungsgemäßen Radträgers 2. Der Radträger 2 selbst ist als Schweißbauteil ausgebildet und ebenfalls mit einem Flansch 3, insbesondere hier dargestellt als Flanschplatte hergestellt. Im Zusammenhang mit Figur 4, welches eine Rückansicht des Radträgers 2 darstellt, werden die Vorteile im Vergleich zu der Ausführungsform von Figur 2 ersichtlich. Der erfindungsgemäße Radträger 2 ist aus zwei Spangenbauteilen 6 sowie einem Stützbauteil 7 als Schweißbauteil ausgebildet. Das Stützbauteil 7 selber weist dazu einen Grundsteg 8 auf, wobei sich von dem Grundsteg 8 jeweils zwei Schenkel 9 erstrecken. Die zwei Spangenbauteile 6 selbst schließen einen hohlen Grundkörperbereich 10 ein bzw. bilden diesen aus, so dass sie sich selbst von dem in Figur 3 dargestellten Flansch 3 zu dem Längslenker 1 hin mit ihrer jeweiligen Wandung erstrecken. Die Spangenbauteile 6 selbst können somit beispielsweise durch Abkanten oder aber besonders einfach umformtechnisch hergestellt werden, bedürfen somit keines dreidimensional komplex geformten Bereiches.

Die einzelnen Spangenbauteile 6 können somit aus voneinander verschiedenen Werkstoffen und/oder mit voneinander verschiedenen Wandstärken W hergestellt sein. Insgesamt ist das so hergestellte Bauteil somit einfacher und kostengünstiger gegenüber dem in Figur 2 dargestellten, aus dem Stand der Technik bekannten Schalenbauteil bei verringertem Bauteilgewicht und/oder erhöhter Festigkeit herstellbar. Ferner ist in Figur 4 gut ersichtlich, dass ein jeweiliges Ende 11 eines Spangenbauteils 6 an einem jeweiligen Ende 11 des anderen Spangenbauteils 6 gegenüberliegend angeordnet ist und beide Enden 11 zusammen dann Montageöffnungen 5 aufweisen und somit eine Aufnahme 4 zur Koppelung mit einem nicht näher dargestellten Lenker ausbilden. Die einzelnen Bauteile können sowohl an den Längslenker 1 und/oder den Flansch 3 mittels Punktschweißen oder aber auch mittels Schweißnähten gekoppelt sein. Auch wäre es beispielsweise im Rahmen der Erfindung vorstellbar, dass ein Vorfixieren stattfindet und dann Längslenker 1 mit dazwischen befindlichen Bauteilen 6, 7 sowie Flansch 3 mittels Widerstandschweißen stoffschlüssig miteinander gekoppelt werden. Insbesondere aus Figur 4 ersichtlich ist, dass die einzelnen Bauteile mithin Spangenbauteile 6 sowie optional das Stützbauteil 7 eine Fachwerkstruktur ausbilden.

### Bezugszeichen:

- 1 -: Längslenker
- 2 -: Radträger
- 3 -: Flansch
- 4 -: Aufnahme
- 5 -: Montageöffnung
- 6 -: Spangenbauteil
- 7 -: Stützbauteil
- 8 -: Grundsteg zu 7
- 9 -: Schenkel zu 7
- 10 -: Grundkörperbereich
- 11 -: Ende zu 6

- W -: Wandstärke

## Patentansprüche

1. Radträger (2) für eine Mehrlenkerachse zur Anordnung an einem Kraftfahrzeug, aufweisend einen Flansch (3) zur Aufnahme (4) einer Radnabe sowie mindestens zwei Aufnahmen (4) zur drehbaren Koppelung mit Lenkern, wobei der Radträger (2) an einen Längslenker (1) mittels thermischem Fügen gekoppelt ist, **dadurch gekennzeichnet, dass** der Radträger (2) als Schweißbauteil ausgebildet ist und einen Grundkörperbereich (10) aufweist, welcher mindestens zwei Blechbauteile aufweist, die durch thermisches Fügen miteinander gekoppelt sind, wobei der Grundkörperbereich (10) eine fachwerkartige Struktur aufweist.

2. Radträger nach Anspruch 1, **dadurch gekennzeichnet, dass** die zwei Blechbauteile als Spangenbauteile (6) ausgebildet sind, wobei die Spangenbauteile (6) sich mit Ihrer Wandung von dem Flansch (3) zu dem Längslenker (1) erstrecken und an diesen jeweils mittels thermischem Fügen gekoppelt sind.

3. Radträger nach Anspruch 2, **dadurch gekennzeichnet, dass** die Enden (11) der Spangenbauteile (6) jeweils eine Lochung aufweisen, wobei zwei Enden (11) von zwei Spangenbauteilen (6) zusammen eine Aufnahme (4) zur drehbaren Anbindung eines Lenkers ausbilden.

4. Radträger nach einem der Ansprüche 1 bis 3, **dadurch gekennzeichnet, dass** ein dreidimensional geformtes im Querschnitt U-förmiges Stützbauteil (7) ausgebildet ist, welches einen Grundsteg (8) mit sich von dem Grundsteg (8) erstreckenden Schenkeln (9) aufweist, wobei an dem Ende des Stützbauteils (7) eine Aufnahme (4) zur drehbaren Anbindung eines Lenkers ausgebildet ist.

5. Radträger nach einem der Ansprüche 1 bis 4, **dadurch gekennzeichnet, dass** ein Spangenbauteil (6) und/oder das Stützbauteil (7) des Radträgers (2) aus metallischem Werkstoff ausgebildet sind.

6. Radträger nach einem der Ansprüche 1 bis 5, **dadurch gekennzeichnet, dass** ein Spangenbauteil (6) und/oder das Stützbauteil (7) aus einem Stahlwerkstoff ausgebildet sind und vergütet sind.

7. Radträger nach Anspruch 6, **dadurch gekennzeichnet, dass** das Vergüten durch Warmumformen und Presshärten hergestellt ist.

8. Radträger nach einem der Ansprüche 1 bis 7, **dadurch gekennzeichnet, dass** das Spangenbauteil (6) und/oder das Stützbauteil (7) voneinander verschiedene Wandstärken (W) und/oder voneinander verschiedene Festigkeiten aufweisen.

9. Radträger nach einem der Ansprüche 1 bis 8, **dadurch gekennzeichnet, dass** der Grundkörperbereich (10) von innen hohl ausgebildet ist.

## Claims

1. Wheel support (2) for a multi-link axle for mounting on a motor vehicle, having a flange (3) as a receptacle (4) for a wheel hub and at least two receptacles (4) for rotatable coupling to links, the wheel support (2) being coupled to a trailing link (1) by thermal bonding, **characterised in that** the wheel support (2) is configured as a welded component and has a main body region (10) which comprises at least two sheet metal components which are coupled to one another by thermal bonding, the main body region (10) having a frame work like structure.

2. Wheel support according to claim 1, **characterised in that** the two sheet metal components are configured as clasp components (6), the clasp components (6) extending with their wall from the flange (3) to the trailing link (1) and being coupled to the latter by thermal bonding in each case.

3. Wheel support according to claim 2, **characterised in that** the ends (11) of the clasp components (6) each have a perforation, two ends (11) of two clasp components (6) together forming a receptacle (4) for the rotatable attachment of a link.

4. Wheel support according to one of claims 1 to 3, **characterised in that** a three-dimensionally shaped support component (7) of U-shaped cross section is formed which comprises a main web (8) with limbs (9) extending from the main web (8), a receptacle (4) for the rotatable attachment of a link being formed at the end of the support component (7).

5. Wheel support according to one of claims 1 to 4, **characterised in that** a clasp component (6) and/or the support component (7) of the wheel support (2) is or are made from metallic material.

6. Wheel support according to one of claims 1 to 5, **characterised in that** a clasp component (6) and/or the supporting component (7) is or are made from a steel material and tempered.

7. Wheel support according to claim 6, **characterised in that** the tempering is produced by hot forming and press hardening.

8. Wheel support according to one of claims 1 to 7, **characterised in that** the clasp component (6) and/or the support component (7) have different wall thicknesses (W) from one another and/or different strengths from one another.

9. Wheel support according to one of claims 1 to 8, **characterised in that** the main body region (10) is of internally hollow configuration.

## Revendications

1. Support de roue (2) pour un essieu multibras pour l'agencement sur un véhicule automobile, comportant une flasque (3) pour le logement (4) d'un moyeu de roue ainsi qu'au moins deux logements (4) pour le couplage rotatif avec des bras, le support de roue (2) étant couplé à un bras longitudinal (1) au moyen d'un assemblage thermique, **caractérisé en ce que** le support de roue (2) est conçu comme une pièce soudée et comporte une zone formant corps de base (10) qui comporte au moins deux pièces de tôle qui sont couplées ensemble par un assemblage thermique, la zone formant corps de base (10) comportant une structure en treillis.

2. Support de roue selon la revendication 1, **caractérisé en ce que** les deux pièces en tôle sont conçues comme des pièces en agrafes (6), les pièces en agrafes (6) s'étendant avec leur paroi de la flasque (3) au bras longitudinal (1) et étant couplées à ceux-ci au moyen d'un assemblage thermique à chaque fois.

3. Support de roue selon la revendication 2, **caractérisé en ce que** les extrémités (11) des pièces en agrafes (6) comportent chacune un trou, deux extrémités (11) des pièces en agrafes (6) formant conjointement un logement (4) pour la fixation rotative d'un bras.

4. Support de roue selon l'une des revendications 1 à 3, **caractérisé en ce qu'**il est prévu une pièce de soutien (7) tridimensionnelle de section transversale en forme de U qui comporte une traverse de base (8) avec des branches (9) s'étendant à partir de la traverse de base (8), un logement (4) pour la fixation rotative d'un bras étant conçu à l'extrémité de la pièce de soutien (7).

5. Support de roue selon l'une des revendications 1 à 4, **caractérisé en ce qu'**une pièce en agrafe (6) et/ou la pièce de soutien (7) du support de roue (2) sont conçues en métal.

6. Support de roue selon l'une des revendications 1 à 5, **caractérisé en ce qu'**une pièce en agrafe (6) et/ou la pièce de soutien (7) sont conçues en acier et sont traitées.

7. Support de roue selon la revendication 6, **caractérisé en ce que** le traitement est un formage à chaud et une trempe sous presse.

8. Support de roue selon l'une des revendications 1 à 7, **caractérisé en ce que** la pièce en agrafe (6) et/ou la pièce de soutien (7) ont des épaisseurs de parois (W) différentes et/ou des résistances différentes.

9. Support de roue selon l'une des revendications 1 à 8, **caractérisé en ce que** la zone formant corps de base (10) est conçue creuse de l'intérieur.
